# FASCICULE DE BREVET EUROPEEN

(11) **EP 3 289 200 B1**
(45) Date de publication et mention de la délivrance du brevet: **19.05.2021**
(21) Numéro de dépôt: 16721864.3
(22) Date de dépôt: 31.03.2016
(51) Int. Cl.: F01M 1/06, F02B 75/04, F16C 3/14, F16C 9/02

(54) **SYSTÈME DE VARIATION DU TAUX DE COMPRESSION D'UN MOTEUR À COMBUSTION INTERNE MUNI D'UN ÉLÉMENT DE GUIDAGE DE LIQUIDE LUBRIFIANT**
SYSTEM ZUR VERÄNDERUNG DES VERDICHTUNGSVERHÄLTNISSES EINER BRENNKRAFTMASCHINE MIT EINEM FLÜSSIGSCHMIERMITTELLEITELEMENT
SYSTEM FOR VARYING THE COMPRESSION RATIO OF AN INTERNAL COMBUSTION ENGINE PROVIDED WITH A LIQUID LUBRICANT GUIDING ELEMENT

(30) Priorité: 28.04.2015 FR 1553800
(43) Date de publication de la demande: 07.03.2018
(73) Titulaire: PSA Automobiles SA, 78300 Poissy (FR); Gomecsys B.V., 1411 AR Naarden (NL)
(72) Inventeur: DE GOOIJER, Lambertus Hendrick, 1401 EP Bussum (NL); WAGENAAR, Sander, 1274 GR Huizen (NL); WAGENVOORT, Willem-Constant, 1273 RG Huizen (NL); BERGER, Julien, 75019 Paris (FR); POGAM, Matthieu, 78400 Chatou (FR); FUIN, Matthieu, 38660 Lumbin (FR)
(74) Mandataire: Bourguignon, Eric Pascal Jean
(86) Numéro de dépôt international: PCT/FR2016/050723
(87) Numéro de publication internationale: WO 2016/174321

(56) Documents cités:
- DE-A1-102008 009 869
- US-A- 2 209 012

## Description

La présente invention porte sur un système de variation du taux de compression d'un moteur à combustion interne muni d'un élément de guidage de liquide lubrifiant.

Le document EP14163870.0 enseigne la réalisation d'un système de variation du taux de compression en fonction des conditions de fonctionnement du moteur. Ce système comporte un ensemble de pièces excentriques montées sur les manetons du vilebrequin de manière à coopérer chacune avec une extrémité de bielle. Un système de commande de la position angulaire des pièces excentriques comporte un arbre d'actionnement et une cascade de pignons montée entre l'arbre d'actionnement et la pièce excentrique située du côté de l'arbre d'actionnement. En outre, à travers les tourillons du vilebrequin, des arbres et des pignons de transfert transmettent la même cinématique de la pièce excentrique de proche en proche sur tous les autres excentriques. Le document US2209012 A divulgue un système similaire.

Le dispositif d'embiellage d'un tel attelage mobile nécessite de lubrifier les paliers des manetons. La configuration du système de variation du taux de compression impose de réaliser un alésage central dans le vilebrequin pour intégrer les arbres de transfert et les roulements correspondant, en général des roulements à aiguilles, dans chaque tourillon. Cet alésage nécessite un diamètre tel (compris entre 14 et 18mm) qu'il est difficile de percer un conduit de lubrification menant du palier de tourillon au palier de maneton en évitant l'alésage interne.

De ce fait, il devient obligatoire de faire passer le liquide lubrifiant via l'alésage central et de le rediriger vers les conduits de lubrification internes aux bras de vilebrequin. Toutefois, cela génère des fuites du circuit de lubrification vers les roulements. En outre, l'alésage axial qui s'étend tout le long du vilebrequin implique un diamètre constant sur la longueur, ce qui ne permet pas de prévoir un épaulement interne au tourillon pour créer une butée interne aux cages des roulements.

L'invention vise à remédier efficacement à ces inconvénients en proposant un vilebrequin de moteur à combustion interne comportant:
- une pluralité de manetons et de tourillons,
- des pièces excentriques montées rotatives chacune sur un palier d'un maneton,
- un alésage traversant axialement de part en part au moins un tourillon pour autoriser le montage d'au moins un arbre de transfert de mouvement vers lesdites pièces excentriques montées sur lesdits manetons, ledit arbre de transfert coopérant avec deux roulements, caractérisé en ce que ledit vilebrequin comporte en outre:
- des conduits internes de circulation de liquide lubrifiant débouchant vers les paliers de deux manetons successifs en passant par ledit alésage, et
- un élément de guidage de liquide lubrifiant emmanché sur ledit arbre de transfert et positionné entre lesdits roulements.

L'invention permet ainsi, à l'aide de l'élément de guidage de liquide lubrifiant simple à réaliser, d'assurer une fonction entretoise pour les cages à aiguille, de limiter les fuites de liquide lubrifiant au strict minimum, et de réduire le temps de montée en pression de l'huile dans le circuit de lubrification.

L'invention permet ainsi de pouvoir guider le liquide de lubrification vers le palier de maneton, alors qu'il est impossible de tracer un conduit de graissage depuis le centre du tourillon vers le centre du maneton, tout en évitant l'alésage central.

Le dispositif de guidage permet donc de guider le lubrifiant autour de l'axe de transfert qui est logé dans cette alésage sons perturber le fonctionnement de cet arbre.

L'invention ne porte absolument pas sur une solution de réduction des frottements.

Selon une réalisation, lesdits roulements dudit arbre de transfert sont en appui contre des extrémités axiales dudit élément de guidage de liquide lubrifiant.

Selon une réalisation, ledit élément de guidage de liquide lubrifiant est muni à ses extrémités axiales de collerettes s'étendant de telle façon que ledit élément de guidage de liquide lubrifiant délimite une chambre annulaire dans laquelle débouchent lesdits conduits internes de circulation de liquide lubrifiant.

Selon une réalisation, ledit élément de guidage de liquide lubrifiant est configuré pour assurer une fuite de liquide lubrifiant vers lesdits roulements dudit arbre de transfert.

Selon une réalisation, ledit élément de guidage de liquide lubrifiant comporte une encoche réalisée au niveau d'une périphérie externe d'au moins une collerette.

Selon une réalisation, ledit élément de guidage de liquide lubrifiant comporte un perçage calibré réalisé dans au moins une collerette.

Selon une réalisation, une hélice est creusée sur une périphérie externe dudit élément de guidage de liquide lubrifiant. Cela permet de faciliter l'arrivée de liquide lubrifiant de l'orifice d'entrée vers les conduits internes.

Selon une réalisation, ledit élément de guidage de liquide lubrifiant comporte un moyen d'indexage par rapport auxdits conduits internes de circulation de liquide lubrifiant.

Selon une réalisation, ledit moyen d'indexage comporte une rainure et une clavette correspondante, l'un de ces éléments étant ménagé dans une paroi dudit vilebrequin délimitant ledit alésage dudit vilebrequin et l'autre de ces éléments étant ménagé dans ledit élément de guidage de liquide lubrifiant.

Selon une réalisation, lesdits roulements dudit arbre de transfert sont des roulements à aiguilles.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en perspective illustrant l'intégration du système de variation de taux de compression selon la présente invention dans un vilebrequin;
La figure 2 est une vue en perspective du système de variation de taux de compression selon la présente invention sans le vilebrequin;
La figure 3 est une vue en perspective illustrant une coupe partielle du vilebrequin selon la présente invention;
La figure 4 est une vue en perspective d'un élément de guidage de liquide lubrifiant selon la présente invention;
La figure 5 est une vue de côté de l'élément de guidage de liquide lubrifiant de la figure 4;
Les figures 6a à 6e montrent des variantes de réalisation des rainures réalisées dans le corps de l'élément de guidage d'huile;
Les figures 7a et 7b représentent une autre variante élément de guidage de lubrifiant selon l'invention avec le vilebrequin, respectivement en vue transversale et longitudinale.

Les éléments identiques, similaires, ou analogues, conservent la même référence d'une figure à l'autre.

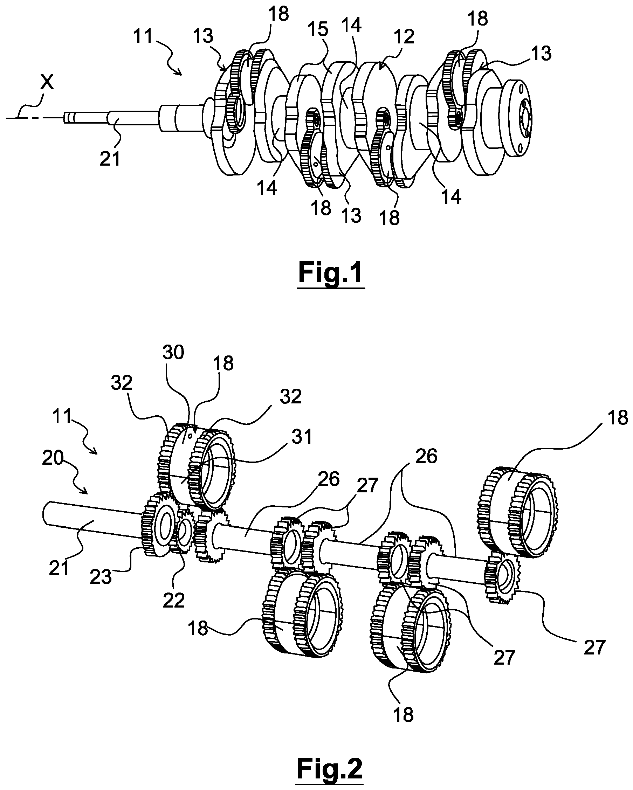

La figure 1 montre une vue en perspective d'un système 11 de variation du taux de compression permettant de faire fonctionner un moteur à combustion interne à un taux de compression élevé dans des conditions de faible charge afin d'améliorer son rendement. Dans des conditions de fonctionnement à fortes charges, le taux de compression peut être diminué afin d'éviter les à-coups.

Plus précisément, le vilebrequin 12 du moteur d'axe X est destiné à être monté rotatif sur un carter du moteur par l'intermédiaire de paliers. Le vilebrequin 12 comporte une pluralité de manetons 13, et de tourillons 14, séparés par des flasques 15 s'étendant sensiblement perpendiculairement par rapport à l'axe X. Le vilebrequin 12 présente en outre une extrémité avant destinée à être liée en rotation avec une poulie (non représentée). Un volant d'inertie (non représenté) est lié en rotation à l'extrémité arrière du vilebrequin 12.

Des pièces excentriques 18 sont montées de manière rotative sur des paliers des manetons 13. Comme cela est mieux visible sur la figure 2, chaque pièce excentrique 18 comporte un corps 30 ayant une face externe excentrique destinée à coopérer avec une grande extrémité d'une bielle, laquelle a sa petite extrémité liée en rotation avec un piston du moteur. La pièce excentrique 18 comporte également deux couronnes dentées 32 positionnées de part et d'autre de la face externe excentrique 30.

Un système de commande 20 de la position angulaire des pièces excentriques 18 comporte un arbre d'actionnement 21 et une cascade de pignons constituée par un pignon d'actionnement 22 monté sur l'arbre d'actionnement 21, et un pignon intermédiaire 23, dit satellite, pour inverser le sens de rotation, engrenant d'une part avec le pignon d'actionnement 22 et d'autre part avec une couronne dentée 32 de la pièce excentrique 18.

En fonctionnement et lorsque l'arbre d'actionnement 21 est fixe en rotation par rapport au bâti, le système présente une configuration de taux de compression fixe. En transitoire de taux, la position angulaire de la pièce excentrique 18 située du côté de la poulie est pilotée par la position angulaire de l'arbre d'actionnement 21 pour ainsi transiter vers un nouveau point de taux de compression. A cet effet, l'arbre d'actionnement 21 pourra être actionné par exemple au moyen d'un engrenage à roue et vis sans fin, ou tout autre moyen de déplacement adapté à l'application.

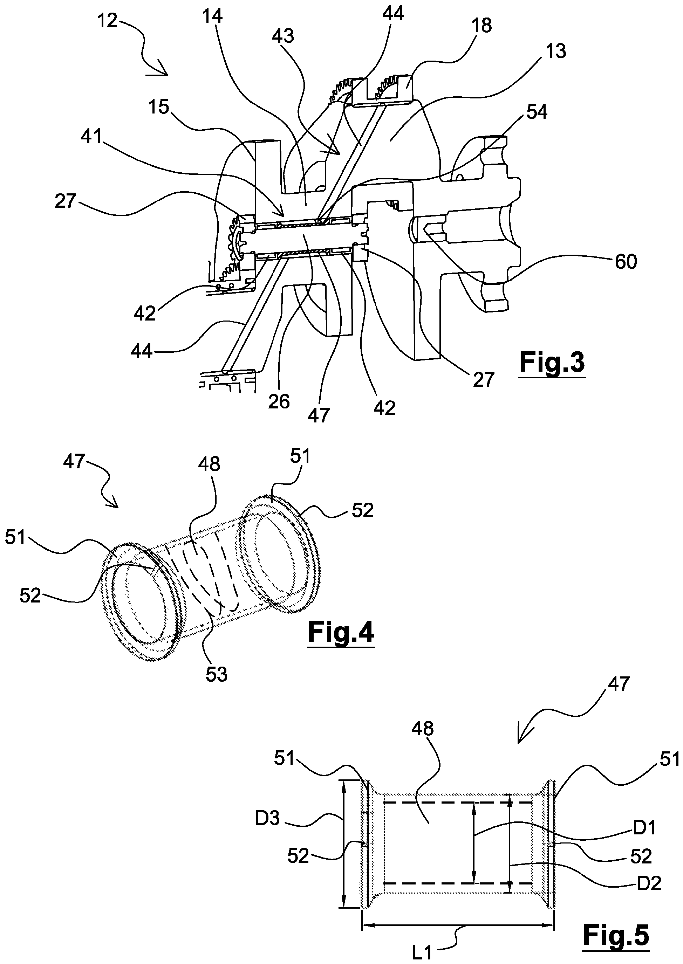

En outre, à travers les tourillons 14 du vilebrequin 12, des arbres 26 et des pignons 27 dits de transfert transmettent la même cinématique de la pièce excentrique 18 située du côté de l'arbre d'actionnement 21 de proche en proche sur toutes les autres pièces excentriques 18 du vilebrequin 12. A cette fin, comme on peut le voir sur la figure 3, un alésage central 41 traverse de part en part les tourillons 14 pour autoriser le montage des arbres de transfert 26. En outre, les pignons 27 montés sur les extrémités de chaque arbre 26 engrènent avec les couronnes dentées 32 des pièces excentriques 18.

Chaque arbre de transfert 26 coopère avec deux roulements 42 situés au niveau des deux extrémités d'une portion de l'alésage 41 réalisé dans le maneton 13 correspondant. Les roulements 42 sont de préférence des roulements de type à aiguilles, mais pourraient en variante être des roulements à billes ou tout autre type de roulement adapté à l'application.

Le moteur comporte en outre un circuit de lubrification 43 ayant des conduits internes 44 de circulation de liquide lubrifiant, en général de l'huile, débouchant vers les paliers de deux manetons 13 successifs en passant par l'alésage central 41. Un élément de guidage de liquide lubrifiant 47 d'axe X est emmanché sur l'arbre de transfert 26 et positionné axialement entre les roulements 42 de l'arbre 26.

L'élément de guidage de liquide lubrifiant 47, montré en détails sur les figures 4 et 5, a une forme globalement tubulaire et présente une longueur L1 telle que les roulements 42 de l'arbre de transfert 26 correspondant peuvent venir en appui contre les extrémités axiales de l'élément de guidage 47, mais pas nécessairement.

L'élément de guidage 47 présente en l'occurrence une portion centrale 48 annulaire d'orientation axiale ayant un diamètre interne D1 correspondant au diamètre de l'arbre de transfert 26 avec un jeu de fonctionnement pour éviter les frottements et un diamètre externe D2 légèrement inférieur au diamètre interne de l'alésage 41. En outre, l'élément de guidage de liquide lubrifiant 47 est muni à ses extrémités axiales de collerettes 51 issues de la périphérie externe de la portion centrale 48. Ces collerettes 51 présente un diamètre externe D3 sensiblement égal au diamètre interne de l'alésage central 41. L'élément de guidage de liquide lubrifiant 47 délimite ainsi avec la paroi de l'alésage 41 une chambre annulaire dans laquelle débouchent les conduits 44 de circulation d'huile.

Avantageusement, l'élément de guidage de liquide lubrifiant 47 est configuré pour assurer une fuite de liquide lubrifiant vers les roulements 42 de l'arbre de transfert 26. A cet effet, l'élément de guidage de liquide lubrifiant 47 comporte une encoche 52 réalisée au niveau d'une périphérie externe d'au moins une des collerettes 51. Alternativement, l'élément de guidage de liquide lubrifiant 47 comporte un perçage calibré réalisé dans au moins une collerette 51.

Afin de faciliter l'arrivée de liquide lubrifiant de l'orifice d'entrée vers les conduits internes 44, une hélice 53 est creusée sur une périphérie externe de l'élément de guidage de liquide lubrifiant 47. Dans ce cas, l'élément de guidage de liquide lubrifiant 47 comporte un moyen d'indexage 54 par rapport aux conduits internes 44. Le moyen d'indexage 54 comporte une rainure et une clavette correspondante, l'un de ces éléments (par exemple la rainure) étant ménagé dans la paroi délimitant l'alésage central 41 et l'autre de ces éléments (par exemple la clavette) étant ménagé dans l'élément de guidage de liquide lubrifiant 47. La configuration peut bien entendu être inversée.

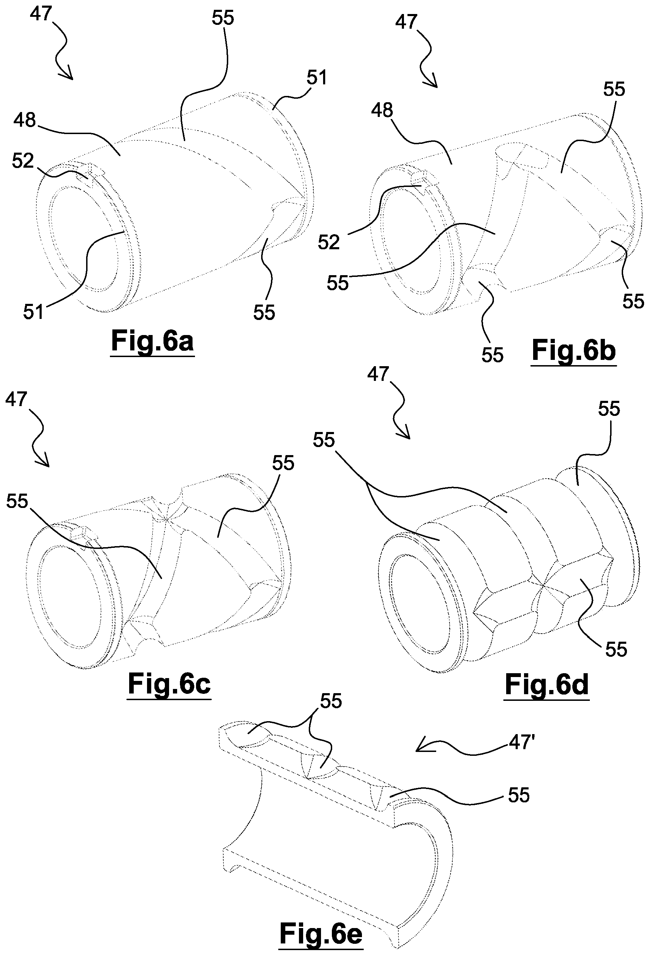

Les figures 6a à 6e montrent des variantes de réalisation des creusures 55 pouvant être réalisées dans le corps de l'élément de guidage 47. Ainsi, en figure 6a, l'élément 47 comporte deux creusures 55 réalisées dans la surface externe de la portion centrale 48 qui se rejoignent à une de leurs extrémités de manière à présenter une forme en V. Dans le mode de réalisation de la figure 6b, les creusures linéaires 55 sont reliées entre elles par leurs extrémités de manière à présenter globalement une forme de losange. Dans le mode de réalisation de la figure 6c, les creusures 55 se croisent entre elles de manière à présenter un ou plusieurs motifs en forme de X. Dans le mode de réalisation de la figure 6d, l'élément 47 comportent un ensemble de creusures 55 de forme circulaire les unes à côté des autres, ainsi qu'une creusure 55 s'étendant suivant la longueur de l'élément 47. Comme cela est illustré sur la figure 6e, l'élément 47 pourra être constitué par deux demi-éléments 47' assemblés entre eux sur l'arbre de transfert 26.

L'invention permet ainsi, à l'aide de l'élément de guidage de liquide lubrifiant 47 simple à réaliser, d'assurer une fonction entretoise pour les roulements à aiguilles 42, de limiter les fuites de liquide lubrifiant au strict minimum, et de réduire le temps de montée en pression de liquide lubrifiant dans le circuit de lubrification 43.

Pour des contraintes industrielles visant à optimiser le temps de cycle du perçage central il peut être nécessaire de percer le tourillon le plus proche de la boite de vitesse. Dans ce cas, un bouchon 60 est mis en place pour éviter les transferts d'huile moteur vers la boîte de vitesses et inversement.

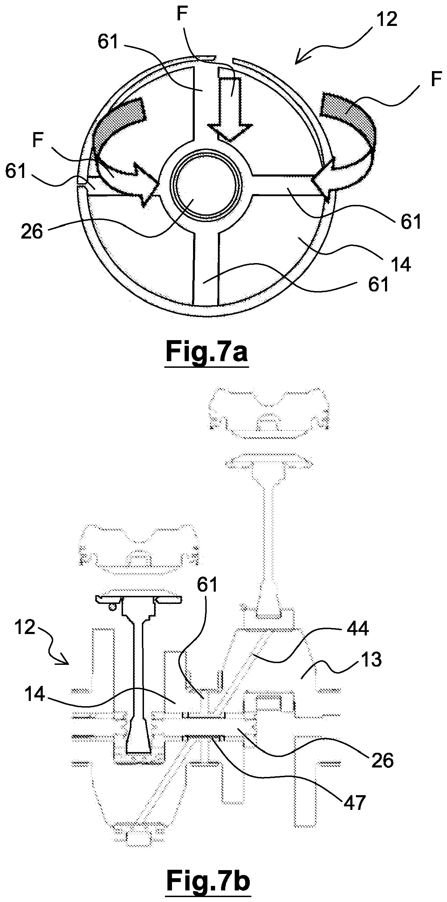

Comme on peut le voir sur les figures 7a et 7b, afin d'obtenir un flux d'huile constant et permanent vers le palier maneton, le vilebrequin 12 possède avantageusement deux ou quatre conduits 61 permettant d'alimenter l'alésage (central) avec un coussinet de préférence uniquement rainuré dans sa partie inférieure. Les flèches F représentent le sens de circulation de l'huile dans le vilebrequin 12.

## Revendications

1. Vilebrequin (12) de moteur à combustion interne comportant:
- une pluralité de manetons (13) et de tourillons (14),
- des pièces excentriques (18) montées rotatives chacune sur un palier d'un maneton,
- un alésage (41) traversant axialement de part en part au moins un tourillon (14) pour autoriser le montage d'au moins un arbre de transfert (26) de mouvement vers lesdites pièces excentriques (18) montées sur lesdits manetons (13), ledit arbre de transfert (26) coopérant avec deux roulements (42),
**caractérisé en ce que** ledit vilebrequin (12) comporte en outre:
- des conduits internes (44) de circulation de liquide lubrifiant débouchant vers les paliers de deux manetons (13) successifs en passant par ledit alésage (41), et
- un élément de guidage de liquide lubrifiant (47) emmanché sur ledit arbre de transfert (26) et positionné entre lesdits roulements (42).

2. Vilebrequin selon la revendication 1, **caractérisé en ce que** lesdits roulements (42) dudit arbre de transfert (26) sont en appui contre des extrémités axiales dudit élément de guidage de liquide lubrifiant (47).

3. Vilebrequin selon la revendication 1 ou 2, **caractérisé en ce que** ledit élément de guidage de liquide lubrifiant (47) est muni à ses extrémités axiales de collerettes (51) s'étendant de telle façon que ledit élément de guidage de liquide lubrifiant (47) délimite une chambre annulaire dans laquelle débouchent lesdits conduits internes (44) de circulation de liquide lubrifiant.

4. Vilebrequin selon l'une quelconque des revendications 1 à 3, **caractérisé en ce que** ledit élément de guidage de liquide lubrifiant (47) est configuré pour assurer une fuite de liquide lubrifiant vers lesdits roulements (42) dudit arbre de transfert (26).

5. Vilebrequin selon les revendications 3 et 4, **caractérisé en ce que** ledit élément de guidage de liquide lubrifiant (47) comporte une encoche (52) réalisée au niveau d'une périphérie externe d'au moins une collerette (51).

6. Vilebrequin selon les revendications 3 et 4, **caractérisé en ce que** ledit élément de guidage de liquide lubrifiant (47) comporte un perçage calibré réalisé dans au moins une collerette (51).

7. Vilebrequin selon l'une quelconque des revendications 1 à 6, **caractérisé en ce que** une hélice (53) est creusée sur une périphérie externe dudit élément de guidage de liquide lubrifiant (47).

8. Vilebrequin selon la revendication 7, **caractérisé en ce que** ledit élément de guidage de liquide lubrifiant (47) comporte un moyen d'indexage (54) par rapport auxdits conduits internes (44) de circulation de liquide lubrifiant.

9. Vilebrequin selon la revendication 8, **caractérisé en ce que** ledit moyen d'indexage (54) comporte une rainure et une clavette correspondante, l'un de ces éléments étant ménagé dans une paroi dudit vilebrequin (12) délimitant ledit alésage (41) dudit vilebrequin (12) et l'autre de ces éléments étant ménagé dans ledit élément de guidage de liquide lubrifiant (47).

10. Vilebrequin selon l'une quelconque des revendications 1 à 9, **caractérisé en ce que** lesdits roulements (42) dudit arbre de transfert (26) sont des roulements à aiguilles.

11. Vilebrequin selon l'une des revendications précédentes, **caractérisé en ce que** le tourillon destiné à être le plus proche de la boîte de vitesse est percé, avec mise en place d'un bouchon (60) évitant les transferts d'huile moteur vers la boite de vitesse et inversement.

12. Vilebrequin selon l'une des revendications précédentes, **caractérisé en ce que** ledit vilebrequin (12) possède deux ou quatre conduits (61) permettant d'alimenter un alésage avec un coussinet, de préférence uniquement rainuré dans sa partie inférieure.

## Patentansprüche

1. Kurbelwelle (12) eine Brennkraftmaschine mit:
- mehrere Kurbelzapfen (13) und Zapfen (14),
- exzentrische Teile (18) montiert zu drehen jeweils auf einem Lager einer Kurbelzapfen,
- eine Bohrung (41), die axial von Seite zu Seite durch mindestens einen Zapfen (14) zur autorisierten ersten Montage bei mindestens einer Bewegung der Übertragungswelle (26) in Richtung der an den Kurbelzapfen (13) montierten Exzenterteile (18) verläuft Übertragungswelle (26), die mit zwei Lagern (42) zusammenarbeitet,
**gekennzeichnet dadurch, dass** der Kurbelwelle (12) umfasst weiter:
- interne Leitungen (44) zum Umwälzen der Schmiermittelflüssigkeit, die sich zu den Lagern zweier aufeinanderfolgender Kurbelzapfen (13) hin öffnen, die durch die Bohrung (41) verlaufen, und
- ein Schmierflüssigkeitsführungselement (47), das auf der Übertragungswelle (26) angebracht und zwischen den Lagern (42) positioniert ist.

2. Kurbelwelle nach Anspruch 1, **dadurch gekennzeichnet, dass** die Lager (42) der Übertragungswelle (26) sind in Anlage an den axialen Enden der Führungselement Schmiermittelflüssigkeit (47).

3. Kurbelwelle nach Anspruch 1 oder 2, **dadurch**
**gekennzeichnet, daß** Schmiermittelflüssigkeit Führungselement (47) an seinen axialen Enden mit Flanschen versehen ist (51) erstreckt, so daß die Schmiermittelflüssigkeit Führungselement (47) eine ringförmige Kammer in die offenen die inneren Leitungen (44) zum Zirkulieren von Schmierflüssigkeit.

4. Kurbelwelle nach einem der Ansprüche 1 bis 3, **dadurch**
**gekennzeichnet daß** Schmiermittelflüssigkeit Führungselement (47) konfiguriert ist, ein, um sicherzustellen, Schmierflüssigkeit Leck auf die Lager (42) der Übertragungswelle (26).

5. Kurbelwelle nach den Ansprüchen 3 und 4, **dadurch**
**gekennzeichnet, daß** Schmierflüssigkeit Führungselement (47) eine Kerbe (52) an einem Außenumfang von mindestens einem Flansch (51) gebildet.

6. Kurbelwelle nach den Ansprüchen 3 und 4, **dadurch**
**gekennzeichnet, daß** flüssiges Schmierführungselement (47) eine kalibrierte Bohrung aus in mindestens einen Flansch (51).

7. Kurbelwelle nach einem der Ansprüche 1 bis 6, **dadurch gekennzeichnet, dass** ein Propeller (53) an einer äußeren Peripherie ausgehöhlt von dem flüssigen Schmierführungselement (47).

8. Kurbelwelle nach Anspruch 7, **dadurch**
**gekennzeichnet, daß** flüssiges Schmierführungselement (47) umfasst, Indexierungsmittel (54) in Bezug auf die inneren Leitungen (44) zum Zirkulieren von Schmierflüssigkeit.

9. Kurbelwelle nach Anspruch 8, **dadurch gekennzeichnet, daß** Indexierungsmittel (54) eine Nut und einen entsprechenden Schlüssel, eines dieser Elemente ausgebildet ist, in einer Wand von der Kurbelwelle (12) begrenzender Bohrung (41) aufweisen. Der Kurbelwelle (12) und das andere dieser Elemente vorgesehen ist in die Schmierflüssigkeit Führungselement (47).

10. Kurbelwelle nach einem der Ansprüche 1 bis 9, **dadurch gekennzeichnet dass** die Lager (42) der Übertragungswelle (26) Nadellager sind.

11. Kurbelwelle nach einem der vorhergehenden Ansprüche, **gekennzeichnet dadurch, dass** der Zapfen, der dem Getriebe am nächsten sein soll, gebohrt wird, wobei der Einbau eines Stopfens (60) die Übertragung von Motoröl auf das Getriebe und umgekehrt verhindert.

12. Kurbelwelle nach einem der vorhergehenden Ansprüchen, **dadurch gekennzeichnet, dass** der Kurbelwelle (12) zwei oder vier Leitungen (61) für eine Zufuhr von Bohrung mit einem Lager, vorzugsweise nur in seinem unteren Teil mit Nuten versehen.

## Claims

1. Crankshaft (12) of an internal combustion engine comprising :
- a plurality of crank pins (13) and journals (14),
- eccentric parts (18) each rotatably mounted on a crankpin bearing,
- a bore (41) axially passing through from side to side at least one journal (14) for authorized first mounting at the least one transfer shaft (26) movement towards said eccentric parts (18) mounted on said crankpins (13), said transfer shaft (26) cooperating with two bearings (42),
**characterized in that** said crankshaft (12) comprises further:
- internal conduits (44) for circulating lubricating liquid opening out to the bearings of two successive crankpins (13) passing through said bore (41), and
- a lubricating liquid guide element (47) fitted onto said transfer shaft (26) and positioned between said bearings (42).

2. Crankshaft according to claim 1, **characterized in that** said bearings (42) of said transfer shaft (26) are in abutment against the axial ends
of said guide member lubricant liquid (47).

3. Crankshaft according to claim 1 or 2, **characterized in that** said lubricant liquid guide element (47) is provided at its axial ends with flanges (51) extending such that said lubricant liquid guide element (47) defines an annular chamber into which open said internal conduits (44) for circulating lubricating liquid.

4. Crankshaft according to any one of claims 1 to 3, **characterized in that** said lubricant liquid guide member (47) is configured to ensure a lubricant liquid leak to said bearings (42) of said transfer shaft (26).

5. Crankshaft according to claims 3 and 4, **characterized in that** said lubricating liquid guide element (47) comprises a notch (52) formed at an outer periphery of at least one flange (51).

6. Crankshaft according to claims 3 and 4, **characterized in that** said lubricating liquid guide element (47) comprises a calibrated bore made in at least one flange (51).

7. Crankshaft according to any one of claims 1 to 6, **characterized in that** a propeller (53) is hollowed out on an outer periphery of
said lubricant liquid guide element (47).

8. Crankshaft according to claim 7, **characterized in that** said lubricating liquid guide element (47) comprises indexing means (54) with respect to said internal ducts (44) for circulating lubricating liquid.

9. Crankshaft according to claim 8, **characterized in that** said indexing means (54) comprises a groove and a corresponding key, one of these elements being formed in a wall of said crankshaft (12) delimiting said bore (41) of said crankshaft (12) and the other of these elements being provided in said lubricating liquid guide element (47).

10. Crankshaft according to any one of claims 1 to 9, **characterized in that** said bearings (42) of said transfer shaft (26) are needle bearings.

11. Crankshaft according to one of the preceding claims, **characterized in that** the journal intended to be closest to the gearbox is drilled, with the installation of a plug (60) preventing transfers of engine oil to the gearbox and vice versa.

12. Crankshaft according to one of the preceding claims, **characterized in that** said crankshaft (12) has two or four conduits (61) for supplying a bore with a bearing, preferably only grooved in its lower part.
